# EUROPEAN PATENT APPLICATION

(11) **EP 2 787 469 A1**
(43) Date of publication of application: **08.10.2014**
(21) Application number: 14162270.4
(22) Date of filing: 28.03.2014
(51) Int. Cl.: G06K 19/07

(54) **Electronic shelf label (ESL) tag**

(30) Priority: 02.04.2013 KR 20130035882; 24.03.2014 KR 20140034150
(71) Applicant: Samsung Electro-Mechanics Co., Ltd., Suwon-si, Gyeonggi-do 443-743 (KR)
(72) Inventor: Cho, Han Jin, 443-743 Gyeonggi-Do (KR); Lee, Tae Ha, 443-743 Gyeonggi-Do (KR); Kim, Wan Su, 443-743 Gyeonggi-Do (KR); Yoon, Dong Sik, 443-743 Gyeonggi-Do (KR)
(74) Representative: Potter Clarkson LLP

(57) **Abstract**

Disclosed herein is an electronic shelf label (ESL) tag including a power adjusting unit (130) connected to the battery (110) to receive power, wherein the power adjusting unit boosts power and provides the boosted power to an IC (120) when the IC is in an active mode, and transfers the power to the IC as it is when the IC is in a sleep mode. Therefore, the ESL tag may be normally operated even though a voltage drop phenomenon of a battery occurs.

## Description

### CROSS REFERENCE(S) TO RELATED APPLICATIONS

This application claims the foreign priority benefit of Korean Patent Applications Serial Nos. 10-2013-0035882 and 10-2014-0034150, entitled "Electronic Shelf Label (ELS) Tag" filed on April 2, 2013 and March 24, 2014, which is hereby incorporated by reference in its entirety into this application.

### BACKGROUND OF THE INVENTION

### 1. Technical Field

The present invention relates to an electronic shelf label (ELS) tag.

### 2. Description of the Related Art

Labels displaying information and prices of products have been used in order to exhibit and sell a large number of products in a predetermined space such as a retail store, or the like.

Generally, price displaying labels have been used in a scheme in which product information required for selling, for example, price information, discount information, and the like, is manually written on paper or is printed on paper in accordance with a standardized format and is then attached to positions adjacent to places at which corresponding products are displayed.

Although it seems that the scheme of applying a paper label according to the related art as described above is simple, convenient, and may be implemented at a low cost, the scheme of applying a paper label according to the related art has a limitation in the case in which a standardized form is used for tens of thousands or more products as in a large-sized retail store and prices of the tens of thousands or more products are frequently changed.

That is, when a price change occurs in some of a large number of products, products of which the price change occurs should be summarized, product information such as changed prices, or the like, should be manually written or be printed, and labels should be corrected or replaced at positions of the corresponding products displayed within the retail store.

Therefore, whenever the price information of the products is changed, a time and manpower are required for the correction and replacement as described above, and necessity of improvement for this in view of a large retail store has increased.

That is, there is a need to develop a means capable of rapidly, accurately, and simply changing product information at only a minimum cost.

Recently, in order to satisfy this market's demand, an attempt to replace an existing paper label with an electronic tag using an electronic apparatus has been conducted. A related art has been disclosed in various documents such as Patent Document 1, Patent Document 2, and the like.

Although a label or an electronic tag has been called various terms such as an electronic shelf label (ESL), an electronic price label (EPL), an electronic information label (EIL), and the like, depending on a language/culture difference among organizations or countries that is developing a related art, it is due to the language/culture difference in recognizing and describing the label and the electronic tag, and objects and uses thereof are substantially the same as each other.

Meanwhile, generally, a battery is used as a basic voltage source in an electronic display apparatus such as the ELS tag, or the like.

In addition, in order to maximize an operation life span of the ESL tag, various technologies capable of decreasing consumption of the battery of the ESL tag have been applied.

Particularly, a time scheduling method of allowing the ESL tag to be in an active mode only in the case in which it should perform a specific operation such as an operation of transmitting and receiving data, an operation of changing a display content, or the like, and allowing the ESL tag to be in a sleep mode in which it consumes only minimum power required for maintaining a specific mode in other cases has been widely used.

However, in the case of using the time scheduling method as described above, the ESL tag uses a relatively large amount of current in the active mode, such that a voltage level of the battery is rapidly decreased.

Particularly, in the case in which the ESL tag is installed in a freezing system or a refrigerating system, it is operated in a low temperature environment. In this case, a voltage drop phenomenon occurs in the battery due to the low temperature environment, such that a power supply voltage provided to the ESL tag becomes lower to a minimum operating voltage Vmin or more of the ESL tag. As a result, a situation in which an operation of the ESL tag is stopped may occur.

That is, in the low temperature environment, there was a problem that the ESL tag is not normally operated even though an amount of electric energy stored in the battery is sufficient.

Meanwhile, in order to solve this problem, a method of increasing capacity of the battery may be considered. Here, generally, in order to increase capacity of a coin type battery applied to the ESL tag, a thickness or an area of the coin type battery should be increased or the number of coil type batteries mounted in one ESL tag should be increased.

However, in the case of increasing the capacity of the battery by this method, a degree of freedom in a design may be decreased in a displacement design of circuit patterns or various modules that should be necessarily included in the ESL tag. That is, the circuit patterns or the modules that have been capable of being implemented by a two-layer printed circuit board should be implemented by a four-layer printed circuit board in order to increase the capacity of the battery, such that a thickness or an area of the ESL tag is increased. This is opposite to a trend toward miniaturization and slimness of an electronic product, and causes an increase in a manufacturing cost of the ELS tag, which is not preferable.

Therefore, the development of a technical means allowing an ESL tag, or the like, to be normally operated even in the case in which a rapid decrease phenomenon of a voltage level occurs has been demanded.

### [Related Art Document]

### [Patent Document]

(Patent Documentt1) US Patent Application Publication No. 2010-0106588 (Patent Documentt1) US Patent Application Publication No. 2010-0205000

### SUMMARY OF THE INVENTION

An object of the present invention is to provide an electronic shelf label (ELS) tag capable or being normally operated even though a voltage drop phenomenon of a battery due to a low temperature environment, or the like, occurs.

According to an exemplary embodiment of the present invention, there is provided an ESL tag including: a battery; an integrated circuit (IC); and a power adjusting unit connected to the battery to receive power, wherein the power adjusting unit boosts the power and provides the boosted power to the IC when the IC is in an active mode, and transfers the power to the IC as it is when the IC is in a sleep mode.

The IC may include: a power input terminal connected to the power adjusting unit to receive the power; and a control signal output terminal outputting a first control signal when the IC is in the active mode and outputting a second control signal when the IC is in the sleep mode.

The power adjusting unit may include: a first terminal having the power applied thereto; a second terminal connected to the control signal output terminal; and a third terminal connected to the power input terminal, and the power adjusting unit may output the same voltage as a voltage applied to the first terminal to the third terminal when the second control signal is applied to the second terminal, and may boost the voltage applied to the first terminal and output the boosted voltage to the third terminal when the first control signal is applied to the second terminal.

The power adjusting unit may include: a switch unit having one end connected to the first terminal, the other end connected to the third terminal, and a control terminal connected to the second terminal; and an up-converter unit having an input terminal connected to the first terminal, an output terminal connected to the third terminal, and a control signal input terminal receiving an inverted signal of the control signal applied to the second terminal, and boosts a voltage applied to the input terminal and outputs the boosted voltage to the third terminal.

The first control signal may be a turn-off or low signal, the second control signal may be a turn-on or high signal, and the up-converter unit may start an operation thereof when the turn-on or high signal is applied to the control signal input terminal and may stop the operation thereof when the turn-off or low signal is applied to the control signal input terminal.

According to another exemplary embodiment of the present invention, there is provided an ESL tag including: a battery outputting power through a power supply terminal; an IC outputting a first control signal in an active mode and outputting a second control signal in a sleep mode; and a power adjusting unit receiving the power and outputting and providing a relatively higher voltage to the IC in the case in which it receives the first control signal than in the case in which it receives the second control signal.

The IC may include: a power input terminal connected to the power adjusting unit to receive the power; and a control signal output terminal outputting the first and second control signals.

The power adjusting unit may include: a first terminal connected to the power supply terminal; a second terminal connected to the control signal output terminal; and a third terminal connected to the power input terminal.

The power adjusting unit may regulate a voltage applied to the first terminal and output the regulated voltage to the third terminal when the second control signal is applied to the second terminal, and may decrease the voltage applied to the first terminal and output the decreased voltage to the third terminal when the first control signal is applied to the second terminal.

The power adjusting unit may include: a regulator having input side connected to the first terminal, an output side connected to the third terminal, and a control terminal connected to the second terminal; and a down-converter unit having an input terminal connected to the first terminal, an output terminal connected to the third terminal, and a control signal input terminal receiving an inverted signal of the control signal applied to the second terminal, and decreases a voltage applied to the input terminal and outputs the decreased voltage to the third terminal.

The first control signal may be a turn-off or low signal, the second control signal may be a turn-on or high signal, and the down-converter unit may start an operation thereof when the turn-on or high signal is applied to the control signal input terminal and may stop the operation thereof when the turn-off or low signal is applied to the control signal input terminal.

According to still another exemplary embodiment of the present invention, there is provided an ESL tag including: a battery outputting power through a power supply terminal; a first IC connected to a power input terminal connected to the power supply terminal to receive the power and a control signal output terminal outputting a control signal, and outputting a first control signal in an active mode and outputting a second control signal in a sleep mode; a second IC separated and operated separately from the first IC; and a power adjusting unit including a first terminal connected to the power supply terminal, a second terminal connected to the control signal output terminal, and a third terminal connected to the second IC, wherein the power adjusting unit outputs the same voltage as that a voltage applied to the first terminal to the third terminal when the second control signal is applied to the second terminal, and boosts the voltage applied to the first terminal and outputs the boosted voltage to the third terminal when the first control signal is applied to the second terminal.

### BRIEF DESCRIPTION OF THE DRAWINGS

FIG. 1 is a graph schematically showing changes in a voltage and a current of an electronic shelf label (ESL) tag depending on time scheduling;
FIG. 2 is a graph schematically showing a difference between voltage levels in the case in which an ESL tag is operated in a normal environment and in the case in which the ESL tag is operated in a low temperature environment;
FIG. 3 is a view schematically showing an ESL tag according to a first exemplary embodiment of the present invention;
FIG. 4 is a view schematically showing an ESL tag according to a second exemplary embodiment of the present invention;
FIG. 5 is a view schematically showing an ESL tag according to a third exemplary embodiment of the present invention;
FIG. 6 is a view schematically showing a power adjusting unit of an ESL tag according to a fourth exemplary embodiment of the present invention; and
FIG. 7 is a view schematically showing a power adjusting unit of an ESL tag according to a fifth exemplary embodiment of the present invention.

### DESCRIPTION OF THE PREFERRED EMBODIMENTS

Various advantages and features of the present invention and methods accomplishing thereof will become apparent from the following description of exemplary embodiments with reference to the accompanying drawings. However, the present invention may be modified in many different forms and it should not be limited to exemplary embodiments set forth herein. These exemplary embodiments may be provided so that this disclosure will be thorough and complete, and will fully convey the scope of the invention to those skilled in the art. Like reference numerals throughout the description denote like elements.

Terms used in the present specification are for explaining exemplary embodiments rather than limiting the present invention. Unless explicitly described to the contrary, a singular form includes a plural form in the present specification. The word "comprise" and variations such as "comprises" or "comprising," will be understood to imply the inclusion of stated constituents, steps, operations and/or elements but not the exclusion of any other constituents, steps, operations and/or elements.

For simplification and clearness of illustration, a general configuration scheme will be shown in the accompanying drawings, and a detailed description of the feature and the technology well known in the art will be omitted in order to prevent a discussion of exemplary embodiments of the present invention from being unnecessarily obscure. Additionally, components shown in the accompanying drawings are not necessarily shown to scale. For example, sizes of some components shown in the accompanying drawings may be exaggerated as compared with other components in order to assist in understanding of exemplary embodiments of the present invention. Like reference numerals on different drawings will denote like components, and similar reference numerals on different drawings will denote similar components, but are not necessarily limited thereto.

In the specification and the claims, terms such as "first", "second", "third", "fourth", and the like, if any, will be used to distinguish similar components from each other and be used to describe a specific sequence or a generation sequence, but is not necessarily limited thereto. It may be understood that these terms are compatible with each other under an appropriate environment so that exemplary embodiments of the present invention to be described below may be operated in a sequence different from a sequence shown or described herein. Likewise, in the present specification, in the case in which it is described that a method includes a series of steps, a sequence of these steps suggested herein is not necessarily a sequence in which these steps may be executed. That is, any described step may be omitted and/or any other step that is not described herein may be added to the method.

In the specification and the claims, terms such as "left" "right", "front", "rear", "top", "bottom", "over", "under", and the like, if any, do not necessarily indicate relative positions that are not changed, but are used for description. It may be understood that these terms are compatible with each other under an appropriate environment so that exemplary embodiments of the present invention to be described below may be operated in a direction different from a direction shown or described herein. A term "connected" used herein is defined as being directly or indirectly connected in an electrical or non-electrical scheme. Targets described as being "adjacent to" each other may physically contact each other, be close to each other, or be in the same general range or region, in the context in which the above phrase is used. Here, a phrase "in an exemplary embodiment" means the same exemplary embodiment, but is not necessarily limited thereto.

Hereinafter, a configuration and an acting effect of exemplary embodiments of the present invention will be described in more detail with reference to the accompanying drawings.

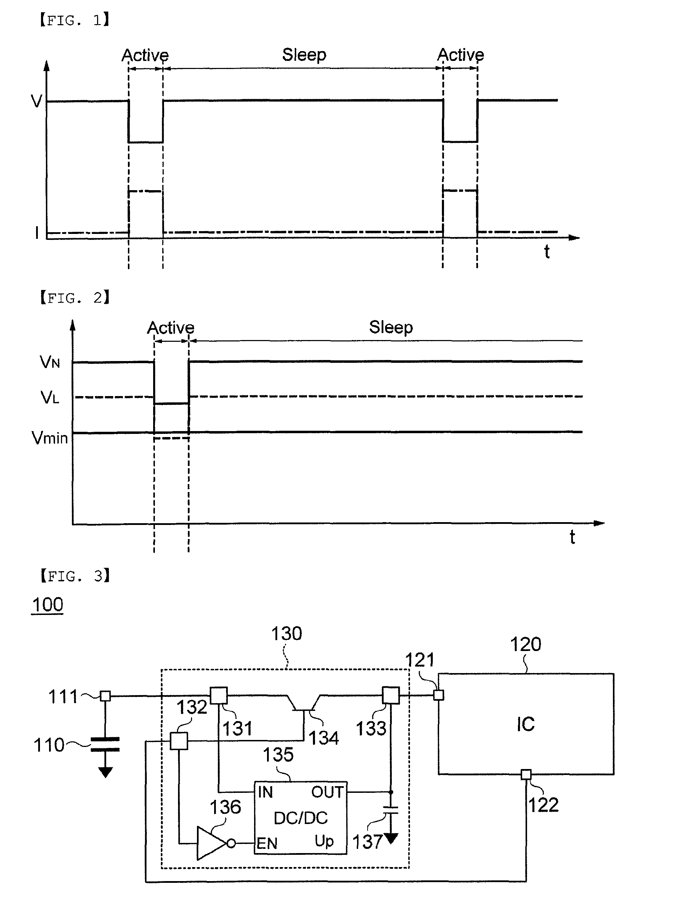

FIG. 1 is a graph schematically showing changes in a voltage and a current of an electronic shelf label (ESL) tag depending on time scheduling; and FIG. 2 is a graph schematically showing a difference between voltage levels in the case in which an ESL tag is operated in a normal environment and in the case in which the ESL tag is operated in a low temperature environment.

Referring to FIG. 1, changes in a voltage and a current of the ESL tag that is in an active mode or a sleep mode depending on a time scheduling method may be understood.

That is, in the active mode, current consumption by the ESL tag is rapidly increased, such that a voltage level may be rapidly decreased, and in the sleep mode, current consumption by the ESL tag is minimized, such that a voltage level may be recovered.

However, in the case in which the ESL tag should be used in a low temperature environment such as a freezing system, a refrigerating system, or the like, a battery output voltage itself is decreased.

That is, as shown in FIG. 2, while a voltage drop in the active mode occurs in a high level as represented by V_{N} in a normal environment such as a normal temperature, or the like, an entire voltage level is decreased as represented by V_{L} in the low temperature environment such as the freezing system, the refrigerating system, or the like, as compared with the normal environment.

In addition, in the case in which the voltage in the active mode is decreased to a minimum operating voltage Vmin or less of the ESL tag due to the voltage drop depending on the low temperature environment as described above, a problem that an operation of the ESL tag is stopped or the ESL tag malfunctions occurs.

The present inventor has developed an ESL tag including a battery, an integrated circuit (IC), and a power adjusting unit.

FIG. 3 is a view schematically showing an ESL tag 100 according to a first exemplary embodiment of the present invention;

Referring to FIG. 3, the ESL tag 100 according to a first exemplary embodiment of the present invention may be configured to include a battery 110, a first IC 120, and a power adjusting unit 130.

The battery 110 may be a general coin battery including a power supply terminal 111, but is not limited thereto.

The first IC 120 may be implemented by an integrated circuit (IC) such as general micro controller unit (MCU), or the like, and may serve to control a display means (not shown), a communication means (not shown), and the like, include in the ESL tag 100 to control the ESL tag 100 to display required information and update corresponding contents.

Here, the first IC 120 may include a power input terminal 121 receiving power and a control signal output terminal 122 outputting control signals, and may output first and second control signals through the control signal output terminal 122.

Here, the first control signal is output in the case in which the ESL tag 100 is in the active mode, and the second controls signal is output in the case in which the ESL tag 100 in the sleep mode.

In addition, the first control signal may be a turn-off or low signal, and the second control signal may be a turn-on or high signal.

The power adjusting unit 130 may include a first terminal 131, a second terminal 132, and a third terminal 133.

Here, the first terminal 131 may be connected to the power supply terminal 111 of the battery 110, the second terminal 132 may be connected to the control signal output terminal 122 of the first IC 120, and the third terminal 133 may be connected to the power input terminal 121 of the first IC 120.

In addition, the power adjusting unit 130 may output a voltage applied to the first terminal 131 thereof to the third terminal 133 thereof as it is or boost the voltage and output the boosted voltage to the third terminal 133 thereof, depending on a control signal applied to the second terminal 132 thereof.

For example, when the first control signal is applied to the second terminal 132, the power adjusting unit 130 may boost the voltage and output the boosted voltage, and when the second control signal is applied to the second terminal 132, the power adjusting unit 130 may output the voltage as it is.

To this end, the power adjusting unit 130 may include a switch unit 134 and an up-converter unit 135.

First, the switch unit 134 may be provided between the first and third terminals 131 and 133 and may be turned on or off to serve to connect or disconnect between the first and third terminals 131 and 133.

Here, a control terminal of the switch unit 134 may be connected to the second terminal 132 to receive the first or second control signal, thereby performing a turn-on or turn-off operation.

Next, the up-converter unit 135 may include an input terminal IN, a control signal input terminal EN, and an output terminal OUT, and may be implemented by a direct current (DC) to DC converter.

Here, the input terminal IN may be connected to the first terminal 131 to receive the power from the battery 110.

In addition, the output terminal OUT may be connected to the third terminal 133 to output the boosted voltage.

In addition, the control signal input terminal EN is connected to the second terminal 132, and does not receive the first or second control signal applied to the second terminal 132 as it is, but receives an inverted signal of the first or second control signal applied to the second terminal 132.

That is, as shown in FIG. 3, an inverter 136 is provided between the second terminal 132 and the control signal input terminal EN, such that the control signal applied to the second terminal 132 may be inverted and be applied to the control signal input terminal EN.

Therefore, when the first control signal, which is the turn-off or low signal, output from the control signal output terminal 122 of the first IC 120 is applied to the second terminal 132 in the active mode, the switch unit 134 is turned off. At the same time, the turn-on or high signal is applied to the control signal input terminal EN of the up-converter unit 135, such that the voltage of the first terminal 131 may be boosted and be provided to the first IC 120 through the output terminal and the third terminal 133.

To the contrary, when the second control signal, which is the turn-on or high signal, output from the control signal output terminal 122 of the first IC 120 is applied in the sleep mode, the switch unit 134 is turned on. At the same time, the turn-off or low signal may be applied to the control signal input terminal EN of the up-converter unit 135, such that an operation of the up-converter unit 135 is stopped.

Since the up-converter 135 is operated in only the active mode and is not operated in the sleep mode, as described above, power unnecessarily consumed in the up-converter unit 135 may be minimized.

In addition, even in the case in which the ESL tag 100 is operated in an low temperature environment, such that an output voltage of the battery 110 is decreased, a level of the voltage output to the first IC 120, or the like, rises by the up-converter in the active mode, such that the ESL tag 100 may be normally operated.

Further, since a current consumed by the up-converter in the active mode is significantly lower than a current consumed by the first IC 120, or the like, it does not substantially influence on a use period of the battery 110.

Meanwhile, the case in which the switch unit 134 receives the control signal applied to the second terminal 132 as it is and the up-converter unit 135 receives the inverted control signal has been described hereinabove. Although not shown, in the case in which the first control signal is the turn-on or high signal and the second control signal is the turn-off signal or low signal, the switch unit may receive an inverted signal of the control signal applied to the second terminal, and the up-converter unit may receive the control signal applied to the second terminal as it is.

In addition, the ESL tag 100 may further include an output capacitor 137 disposed between the third terminal 133 and a ground to stabilize (or smooth) the voltage output to the third terminal 133.

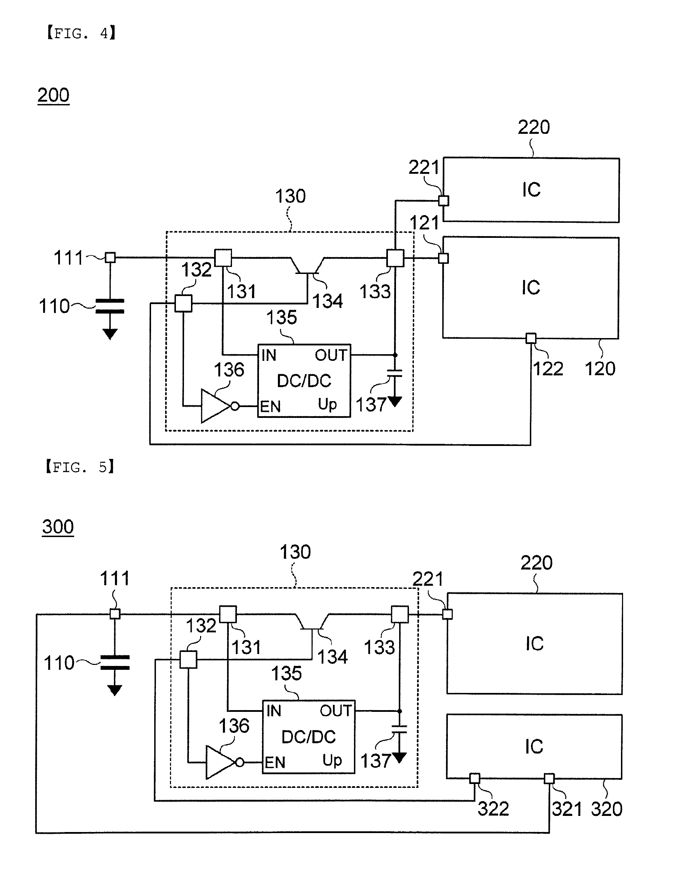

FIG. 4 is a view schematically showing an ESL tag 200 according to a second exemplary embodiment of the present invention.

Referring to FIG. 4, the ESL tag 200 according to a second exemplary embodiment of the present invention may further include a second IC 220.

The second IC 220 may include a power input terminal 221 connected to the third terminal 133 of the power adjusting unit 130 according to a first exemplary embodiment of the present invention described above to serve to control predetermined operations such as a wake-up operation, a data transmission operation, and the like, of the ESL tag 200.

FIG. 5 is a view schematically showing an ESL tag 300 according to a third exemplary embodiment of the present invention.

Referring to FIG. 5, the ESL tag 300 according to a third exemplary embodiment of the present invention may include a third IC 320 including a power input terminal 321 connected to the power supply terminal 111 of the battery 110 to directly receive power, instead of the first IC 120 described above with reference to FIG. 3.

Here, the third IC 320 may include a control signal output terminal 322 to output a first control signal in the active mode and output a second control signal in the sleep mode, similar to the first IC 120 described above.

In second and third exemplary embodiments of the present invention described above, the ESL tags 200 and 300 including two or more ICs and capable of being normally operated even in an environment in which a phenomenon that a voltage level is rapidly decreased occurs are provided.

In addition, it may be understood that in the case in which efficiency and an amount of current of the up-converter unit 135 are lower than an amount of current provided to all of a plurality of ICs, a boosted voltage may also be provided to only any one IC, as in a third exemplary embodiment of the present invention.

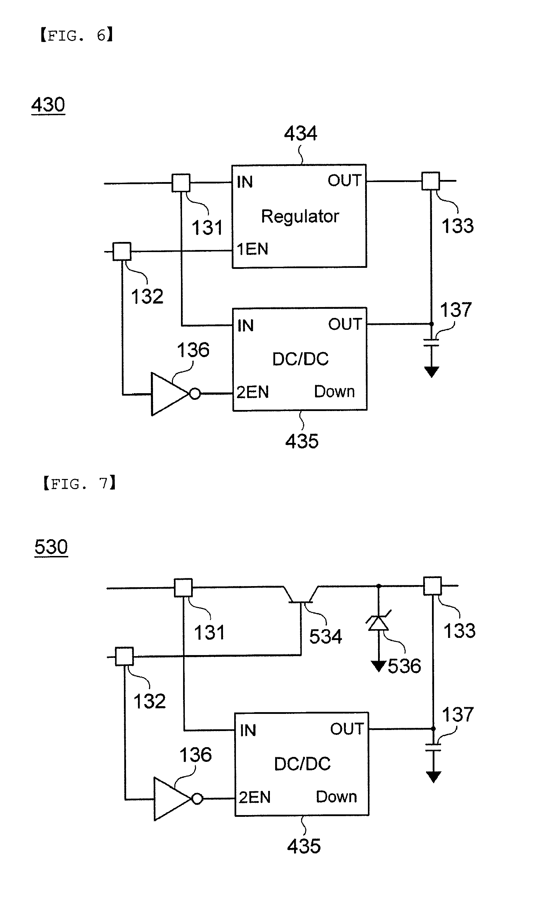

FIG. 6 is a view schematically showing a power adjusting unit 430 of an ESL tag according to a fourth exemplary embodiment of the present invention.

Referring to FIG. 6, the power adjusting unit 430 of the ESL tag according to the present exemplary embodiment may include a regulator 434 and a down-converter unit 435.

That is, in the case in which the battery 110 outputs a voltage higher than an operating voltage of the first IC 120, the power adjusting unit 430 may regulate an output voltage of the battery 110 and provide the regulated voltage to the third terminal 133 in the sleep mode, and may decrease an output voltage of the battery 100 and provide the decreased voltage to the third terminal 133 in the active mode.

FIG. 7 is a view schematically showing a power adjusting unit 530 of an ESL tag according to a fifth exemplary embodiment of the present invention.

Referring to FIG. 7, it may be understood that the power adjusting unit 530 of the ESL tag according to the present exemplary embodiment may include a switch unit 534 and a Zener diode 536 instead of the regulator 434 shown in FIG. 6.

The ESL tag according to exemplary embodiments of the present invention configured as described above may prevent a phenomenon that it is not operated due to a voltage drop in a low temperature environment even though an amount of remaining current in the battery is sufficient, without increasing capacitor of the battery.

The ESL tag according to exemplary embodiments of the present invention configured as described above may be normally operated even though it is operated in the low temperature environment, or the like, such that a voltage drop phenomenon of the battery occurs.

In addition, power unnecessarily consumed in the converter may be minimized.

## Claims

1. An electronic shelf label (ESL) tag comprising:
a battery;
an integrated circuit (IC); and
a power adjusting unit connected to the battery to receive power,
wherein the power adjusting unit boosts the power and provides the boosted power to the IC when the IC is in an active mode, and transfers the power to the IC as it is when the IC is in a sleep mode.

2. The ESL tag according to claim 1, wherein the IC includes:
a power input terminal connected to the power adjusting unit to receive a power; and
a control signal output terminal outputting a first control signal when the IC is in the active mode and outputting a second control signal when the IC is in the sleep mode.

3. The ELS tag according to claim 2, wherein the power adjusting unit includes:
a first terminal having the power applied thereto;
a second terminal connected to the control signal output terminal; and
a third terminal connected to the power input terminal, and
the power adjusting unit outputs the same voltage as a voltage applied to the first terminal to the third terminal when the second control signal is applied to the second terminal, and boosts the voltage applied to the first terminal and outputs the boosted voltage to the third terminal when the first control signal is applied to the second terminal.

4. The ESL tag according to claim 3, wherein the power adjusting unit includes:
a switch unit having one end connected to the first terminal, the other end connected to the third terminal, and a control terminal connected to the second terminal; and
an up-converter unit having an input terminal connected to the first terminal, an output terminal connected to the third terminal, and a control signal input terminal receiving an inverted signal of the control signal applied to the second terminal, and boosts a voltage applied to the input terminal and outputs the boosted voltage to the third terminal.

5. The ESL tag according to claim 4, wherein the first control signal is a turn-off or low signal,
the second control signal is a turn-on or high signal, and
the up-converter unit starts an operation thereof when the turn-on or high signal is applied to the control signal input terminal, and stops the operation thereof when the turn-off or low signal is applied to the control signal input terminal.

6. An ESL tag comprising:
a battery outputting a power through a power supply terminal;
an IC outputting a first control signal in an active mode and outputting a second control signal in a sleep mode; and
a power adjusting unit receiving the power and outputting and providing a relatively higher voltage to the IC in the case in which it receives the first control signal than in the case in which it receives the second control signal.

7. The ESL tag according to claim 6, wherein the IC includes:
a power input terminal connected to the power adjusting unit to receive the power; and
a control signal output terminal outputting the first and second control signals.

8. The ESL tag according to claim 7, wherein the power adjusting unit includes:
a first terminal connected to the power supply terminal;
a second terminal connected to the control signal output terminal; and
a third terminal connected to the power input terminal.

9. The ESL tag according to claim 8, wherein the power adjusting unit regulates a voltage applied to the first terminal and outputs the regulated voltage to the third terminal when the second control signal is applied to the second terminal, and decreases the voltage applied to the first terminal and outputs the decreased voltage to the third terminal when the first control signal is applied to the second terminal.

10. The ESL tag according to claim 8, wherein the power adjusting unit includes:
a regulator having input side connected to the first terminal, an output side connected to the third terminal, and a control terminal connected to the second terminal; and
a down-converter unit having an input terminal connected to the first terminal, an output terminal connected to the third terminal, and a control signal input terminal receiving an inverted signal of the control signal applied to the second terminal, and decreases a voltage applied to the input terminal and outputs the decreased voltage to the third terminal.

11. The ESL tag according to claim 10, wherein the first control signal is a turn-off or low signal,
the second control signal is a turn-on or high signal, and
the down-converter unit starts an operation thereof when the turn-on or high signal is applied to the control signal input terminal, and stops the operation thereof when the turn-off or low signal is applied to the control signal input terminal.

12. An ESL tag comprising:
a battery outputting power through a power supply terminal;
a first IC connected to a power input terminal connected to the power supply terminal to receive the power and a control signal output terminal outputting a control signal, and outputting a first control signal in an active mode and outputting a second control signal in a sleep mode;
a second IC separated and operated separately from the first IC; and
a power adjusting unit including a first terminal connected to the power supply terminal, a second terminal connected to the control signal output terminal, and a third terminal connected to the second IC,
wherein the power adjusting unit outputs the same voltage as that a voltage applied to the first terminal to the third terminal when the second control signal is applied to the second terminal, and boosts the voltage applied to the first terminal and outputs the boosted voltage to the third terminal when the first control signal is applied to the second terminal.
